# DEMANDE DE BREVET EUROPEEN

(11) **EP 4 815 624 A1**
(43) Date de publication de la demande: **30.09.2026**
(21) Numéro de dépôt: 26168376.7
(22) Date de dépôt: 27.03.2026
(51) Int. Cl.: H05B 3/16, H05B 3/26, H05B 3/34

(54) **PIÈCE D ÉQUIPEMENT AVEC ÉLÉMENT CHAUFFANT ET PROCÉDÉ DE FABRICATION ASSOCIÉ**

(30) Priorité: 27.03.2025 FR 2503177
(71) Demandeur: Faurecia Intérieur Industrie, 92000 Nanterre (FR)
(72) Inventeur: ZHAO, Lily, 60114 MERU CEDEX (FR); TRILLAT, Sebastien, 78300 POISSY (FR)
(74) Mandataire: Lavoix

(57) **Abrégé**

L'invention concerne une pièce d'équipement (10) comportant : un corps (12) en matériau plastique ; et un élément chauffant (14) comprenant une nappe souple (40) ; le corps comportant une première (16) et une deuxième (17) portions, continues l'une par rapport à l'autre et alignées selon une première direction (Y) ;
la première portion (16) comprenant : une première et une deuxième faces principales ; et une face d'extrémité (24), joignant lesdites faces principales ;
l'élément chauffant comprenant une partie interne et une partie externe.

Une distance entre les première et deuxième faces principales diminue progressivement entre la deuxième portion (17) du corps et la face d'extrémité (24).

## Description

La présente invention concerne une pièce d'équipement, du type comportant : un corps en matériau plastique ; et un élément chauffant comprenant une nappe souple ; le corps comportant une première et une deuxième portions, continues l'une par rapport à l'autre et alignées selon une première direction ; la première portion comprenant : une première et une deuxième faces principales, sensiblement opposées l'une à l'autre ; et une face d'extrémité, joignant lesdites première et deuxième faces principales à l'opposé de la deuxième portion ; la deuxième portion comprenant une troisième et une quatrième faces principales, sensiblement opposées l'une à l'autre, continues respectivement avec la première et avec la deuxième faces principales ; l'élément chauffant comprenant : une partie interne, au contact du matériau plastique du corps ; et une partie externe, en saillie par rapport audit corps.

L'invention s'applique particulièrement aux pièces d'équipement chauffantes pour véhicules automobiles.

Il est connu de réaliser de telles pièces d'équipement en surmoulant le corps sur l'élément chauffant par un procédé d'injection plastique. Cependant, un tel procédé de fabrication peut conduire à des contraintes mécaniques sur l'élément chauffant, notamment à la jonction entre les parties internes et externes. Ledit élément chauffant risque alors d'être détérioré durant le procédé de fabrication.

Par ailleurs, le niveau de brillance des pièces plastiques obtenues par moulage par injection est associé à d'autres contraintes de mise en œuvre du procédé de fabrication.

Dans le but de résoudre ces problèmes, l'invention a pour objet une pièce d'équipement du type précité, dans laquelle : une distance entre les première et deuxième faces principales diminue progressivement entre une première valeur, à proximité de la deuxième portion du corps, et une deuxième valeur, à proximité de la face d'extrémité ; et la partie interne de l'élément chauffant comprend une première et une deuxième zones, continues l'une par rapport à l'autre ; la première zone étant disposée entre la deuxième zone et la partie externe de l'élément chauffant selon la première direction ; les première et deuxième zones de ladite partie interne formant respectivement la première et la troisième faces principales du corps.

Suivant d'autres aspects avantageux de l'invention, la pièce d'équipement comporte l'une ou plusieurs des caractéristiques suivantes, prises isolément ou suivant toutes les combinaisons techniquement possibles :
- la première portion du corps comporte une pluralité de nervures en saillie par rapport à la première face principale, chaque nervure s'étendant selon la première direction depuis la face d'extrémité ;
- chacune de la pluralité de nervures s'étend jusqu'à une crête sensiblement plane, les crêtes de la pluralité de nervures étant sensiblement coplanaires et formant un plan de crête ;
- chacune des première et troisième faces principales du corps est sensiblement plane ; la troisième face principale forme un premier angle avec la première face principale et un deuxième angle avec le plan de crête ; chacun desdits premier et deuxième angles étant compris entre 90° et 170° ; le deuxième angle étant strictement inférieur au premier angle ;
- la partie interne de l'élément chauffant comprend en outre une troisième zone, disposée entre la première zone et la partie externe de l'élément chauffant et formant la face d'extrémité de la première portion du corps ;
- une première épaisseur de la première portion du corps, à proximité de la deuxième portion, est sensiblement égale à une deuxième épaisseur de ladite deuxième portion.

L'invention se rapporte en outre à un procédé de fabrication d'une pièce d'équipement telle que décrite ci-dessus, comprenant les étapes suivantes : fourniture d'une cavité de moulage, comprenant une surface de moulage ; ladite surface de moulage comprenant : une première partie, complémentaire des première et troisième faces principales du corps ; et une deuxième partie, complémentaire des nervures du corps ; disposition de la partie interne de l'élément chauffant dans la cavité de moulage ; puis injection de matériau plastique à l'état fluide dans la cavité de moulage, de sorte à plaquer la partie interne de l'élément chauffant contre la première partie de la surface de moulage ; puis durcissement du matériau plastique, de sorte à former le corps.

Suivant d'autres aspects avantageux de l'invention, le procédé comporte l'une ou plusieurs des caractéristiques suivantes, prises isolément ou suivant toutes les combinaisons techniquement possibles :
- la cavité de moulage est formée par un premier et un deuxième éléments de moules, mobiles l'un par rapport à l'autre ; et lors de l'injection du matériau plastique, la partie externe de l'élément chauffant est pressée entre lesdits premier et deuxième éléments de moule ;
- la nappe souple de l'élément chauffant est solidaire d'un élément de maintien, à l'opposé de la partie externe dudit élément chauffant ; l'un des premier et deuxième éléments de moule comprend : une partie principale ; et un élément de blocage, apte à être assemblé de manière amovible à ladite partie principale ; et lors de l'injection du matériau plastique, l'élément de maintien est pressé entre ladite partie principale et ledit élément de blocage dudit premier ou deuxième élément de moule.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue de face d'une pièce d'équipement selon un mode de réalisation de l'invention ;
[Fig. 2] la figure 2 est une vue de détail, en coupe, de la pièce d'équipement de la figure 1 ; et
[Fig. 3] la figure 3 est une vue schématique, en coupe, d'une étape d'un procédé de fabrication de la pièce d'équipement des figures 1 et 2.

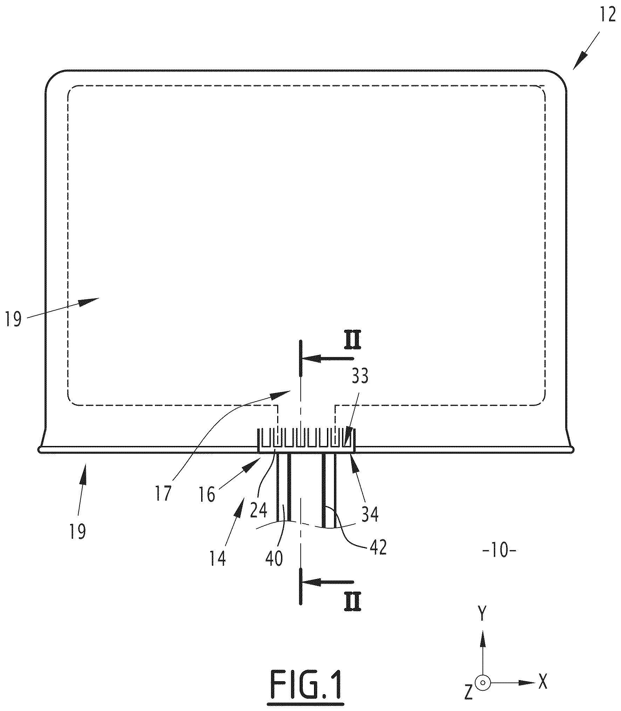

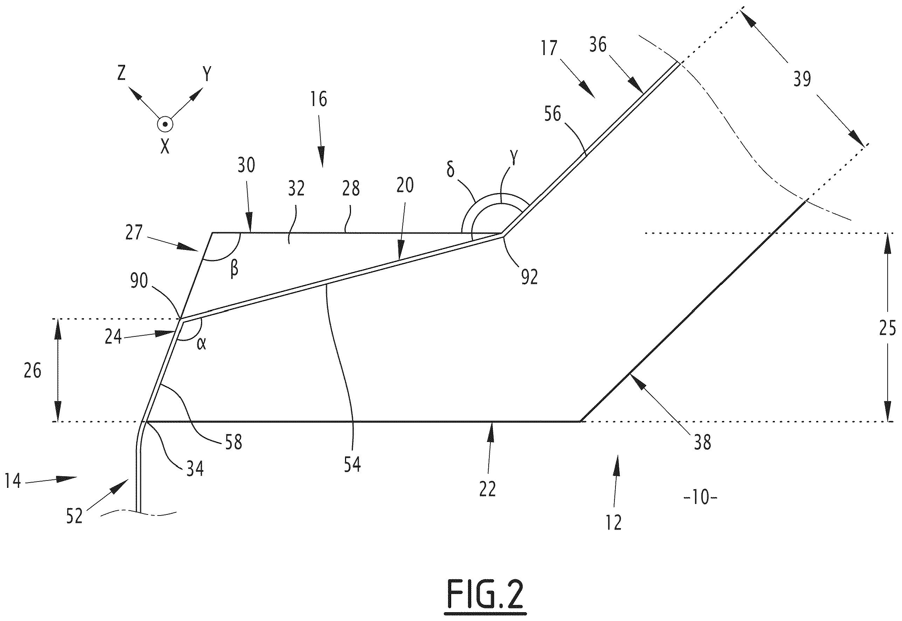

Les figures 1 et 2 montrent une pièce 10 d'équipement selon un mode de réalisation de l'invention.

La pièce 10 comporte un corps 12 et un élément chauffant 14.

Le corps 12 de la pièce 10 est formé d'un matériau plastique, notamment d'un matériau compatible avec un procédé d'injection, comme il sera décrit ci-après. Un tel matériau est par exemple de type polypropylène.

Dans le mode de réalisation représenté, le corps 12 comporte une première 16 et une deuxième 17 portions, continues l'une par rapport à l'autre et alignées selon une première direction.

On considère une base orthonormée (X, Y, Z) associée au corps 12, la première direction correspondant à la direction Y.

Plus précisément, dans le mode de réalisation représenté sur la figure 1, le corps 12 comporte : une portion centrale 18 ; et une portion périphérique 19, continue avec la portion centrale 18 et formant un bord du corps 12. La portion périphérique 19 s'étend sensiblement selon une deuxième direction X, perpendiculaire à la première direction Y. Les première 16 et deuxième 17 portions du corps 12 sont incorporées respectivement à la portion périphérique 19 et à la portion centrale 18.

La figure 2 montre une vue de détail, en coupe, du corps 12 au niveau des première 16 et deuxième 17 portions.

Comme visible sur la figure 2, la première portion 16 comprend : une première 20 et une deuxième 22 faces principales, sensiblement opposées l'une à l'autre ; et une face d'extrémité 24, joignant lesdites première 20 et deuxième 22 faces principales.

La face d'extrémité 24 est disposée à l'opposé de la deuxième portion 17 selon la première direction Y. Dans le mode de réalisation représenté, la face d'extrémité 24 est sensiblement plane et forme un angle α avec la première face principale 20. Préférentiellement, l'angle α est compris entre 90° et 170°, plus préférentiellement compris entre 90° et 135°.

Une épaisseur de la première portion 16 du corps 12, soit une distance entre les première 20 et deuxième 22 faces principales, diminue progressivement entre la deuxième portion 17 du corps et la face d'extrémité 24.

Dans le mode de réalisation représenté, les première 20 et deuxième 22 faces principales sont sensiblement planes ; à proximité d'une jonction avec la deuxième portion 17, la première portion 16 présente une première épaisseur 25 ; et à proximité de la face d'extrémité 24, la première portion 16 présente une deuxième épaisseur 26, strictement inférieure à la première épaisseur 25.

La première portion 16 du corps 12 comporte en outre une pluralité de nervures 27, chaque nervure 27 s'étendant selon la première direction Y depuis la face d'extrémité 24. De préférence, chaque nervure 27 s'étend sensiblement jusqu'à la deuxième portion 17 du corps.

Chaque nervure 27 forme une saillie depuis la première face principale 20 jusqu'à une crête 28. Les crêtes 28 de la pluralité de nervures 27 sont sensiblement alignées selon la deuxième direction X.

Dans le mode de réalisation représenté, la crête 28 de chacune de la pluralité de nervures 27 est sensiblement plane, les crêtes 28 desdites nervures étant sensiblement coplanaires et formant un plan de crête 30.

Le plan de crête 30 forme avec la face d'extrémité 24 un angle β, strictement supérieur à 90° et inférieur à 170°. Par ailleurs l'angle β est strictement inférieur à l'angle α entre la première face principale 20 et la face d'extrémité 24.

De préférence, comme dans le mode de réalisation représenté, le plan de crête 30 est parallèle à la deuxième face principale 22 de la première portion 16 du corps 12.

Selon la deuxième direction X, chaque nervure 27 est délimitée par deux flancs 32, qui sont de préférence sensiblement parallèles entre eux. Dans le mode de réalisation représenté, chaque flanc 32 présente une forme triangulaire et est bordé par la première face principale 20, le plan de crête 30 et la face d'extrémité 24.

Par ailleurs, la face d'extrémité 24 comporte un premier bord 33 crénelé, bordé par la première face principale 20, le plan de crête 30 et les flancs 32 des nervures 27.

La face d'extrémité 24 comporte en outre un deuxième bord 34, opposé audit premier bord 33 crénelé et bordant la deuxième face principale 22. De préférence, le deuxième bord 34 est sensiblement rectiligne et s'étend selon la deuxième direction X.

La deuxième portion 17 du corps 12 comprend une troisième 36 et une quatrième 38 faces principales, sensiblement opposées l'une à l'autre. La troisième face principale 36 de la deuxième portion 17 est continue avec la première face principale 20 de la première portion 16 du corps 12. La quatrième face principale 38 de la deuxième portion 17 est continue avec la deuxième face principale 22 de la première portion 16 du corps 12.

Dans le mode de réalisation représenté, les troisième 36 et quatrième 38 faces principales sont sensiblement planes, parallèles entre elles et s'étendent dans des plans (X, Y). La deuxième portion 17 du corps 12 présente ainsi une troisième épaisseur 39 (figure 2), sensiblement constante, entre les troisième 36 et quatrième 38 faces principales. De préférence, la troisième épaisseur 39 est sensiblement égale à la première épaisseur 25 de la première portion 16, à proximité de la deuxième portion 17.

Dans le mode de réalisation représenté, la troisième face principale 36 forme une surface concave avec la première face principale 20. Plus précisément, la troisième face principale 36 forme un angle γ avec la première face principale 20 et un angle δ avec le plan de crête 30. Chacun desdits angles γ et δ est compris entre 90° et 170°, l'angle δ étant strictement inférieur à l'angle γ.

A l'inverse, la quatrième face principale 38 forme une surface convexe avec la deuxième face principale 22. De préférence, les deuxième 22 et quatrième 38 faces principale sont destinées à être visibles par un utilisateur de la pièce 10.

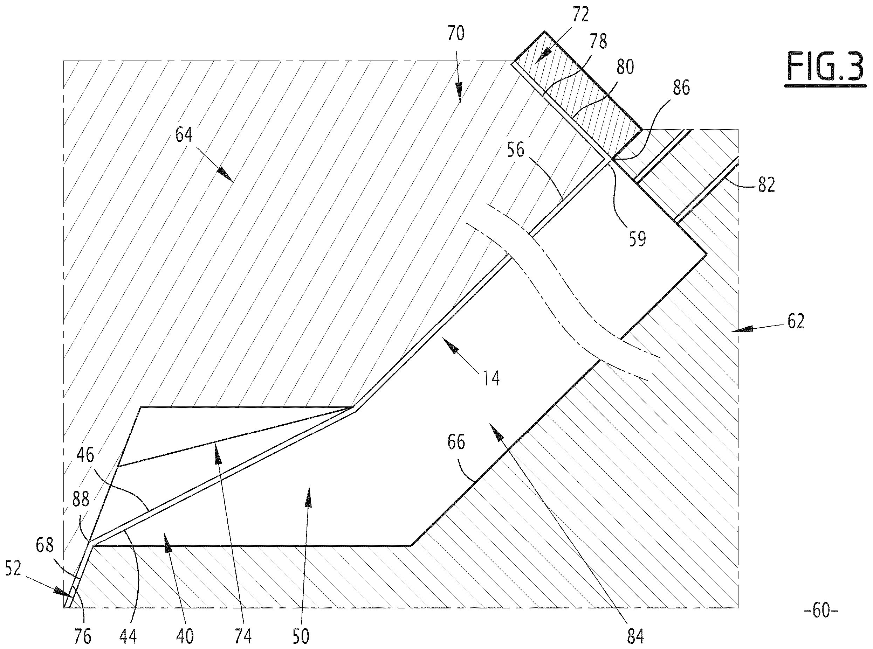

L'élément chauffant 14 de la pièce 10 comporte : une nappe souple 40 ; et au moins un fil chauffant 42, solidaire de ladite nappe souple. La nappe souple 40 comporte une première 44 et une deuxième 46 faces opposées (figure 3).

La nappe souple 40 est de préférence une nappe textile, tissée ou non-tissée.

L'au moins un fil chauffant 42 s'étend sur la nappe souple 40, notamment sur la première 44 et/ou sur la deuxième 46 face de ladite nappe souple. L'au moins un fil chauffant 42 est par exemple tissé dans la nappe souple 40 ou cousu à la première 44 ou à la deuxième 46 face de ladite nappe souple.

L'au moins un fil chauffant 42 est suffisamment fin pour conserver à la nappe souple 40 des propriétés flexibles et étirables, comme décrit ci-après.

L'élément chauffant 14 comprend : une partie interne 50 (figure 3), au contact du matériau plastique du corps 12 ; et une partie externe 52, en saillie par rapport audit corps 12. La partie interne 50 de l'élément chauffant 14 s'étend principalement au niveau de la portion centrale 18 du corps 12 (figure 1), de sorte à chauffer ladite portion centrale.

La partie externe 52 de l'élément chauffant 14 permet de connecter électriquement l'au moins un fil chauffant 42 à une source d'énergie électrique (non représentée).

Dans le mode de réalisation représentée, la partie externe 52 de l'élément chauffant 14 forme saillie selon la première direction Y, depuis la face d'extrémité 24 de la première portion 16 du corps 12. Plus précisément, la partie externe 52 forme saillie depuis le deuxième bord 34 de la face d'extrémité 24.

La partie interne 50 de l'élément chauffant 14 comprend une première 54, une deuxième 56 et une troisième 58 zones, continues entre elles et alignées selon la première direction Y. La première zone 54 joint les deuxième 56 et troisième 58 zones et ladite troisième zone 58 joint la première zone 54 et la partie externe 52 de l'élément chauffant.

De préférence, la partie interne 50 de l'élément chauffant comprend une extrémité 59 (figure 3), opposée à la partie externe 52 selon la première direction Y. De préférence, ladite extrémité 59 est portée par la deuxième zone 56.

La deuxième zone 56 de la partie interne 50 forme la troisième face principale 36 de la deuxième portion 17 du corps 12. La première zone 54 de ladite partie interne forme la première face principale 20 de la première portion 16 du corps 12. La troisième zone 58 de ladite partie interne forme au moins partiellement la face d'extrémité 24 de ladite première portion.

En d'autres termes, chaque zone 54, 56, 58 de la partie interne 50 de l'élément chauffant 14 recouvre le matériau plastique du corps 12 au niveau de la face correspondante ; ou préférentiellement, au niveau de chaque zone 54, 56, 58 de la partie interne 50, la nappe souple 40 de l'élément chauffant 14 est incorporée dans le matériau plastique formant la face correspondante du corps 12.

En conséquence de la configuration décrite ci-dessus de la partie interne 50 de l'élément chauffant 14, les première 54 et deuxième 56 zones de ladite partie interne forment l'angle γ décrit ci-dessus entre les première 20 et troisième 36 faces principales ; et les première 54 et troisième 58 zones de ladite partie interne forment l'angle α décrit ci-dessus entre la première face principale 20 et la face d'extrémité 24.

Un procédé de fabrication de la pièce 10 d'équipement va à présent être décrit. Ledit procédé comporte une étape de moulage du corps 12 par injection, de manière à incorporer la partie interne 50 de l'élément chauffant 14 dans ledit corps 12.

La figure 3 représente schématiquement, en coupe, une installation 60 de mise en œuvre du procédé de fabrication de la pièce 10 d'équipement. La figure 3 représente l'installation 60 dans une configuration assemblée, qui sera décrite ultérieurement.

L'installation 60 comporte un premier 62 et un deuxième 64 éléments de moule, mobiles l'un par rapport à l'autre.

Le premier élément de moule 62 comporte : une première surface de moulage 66 ; et une première surface d'appui 68, bordant ladite première surface de moulage 66.

Le deuxième élément de moule 64 comporte : une partie principale 70 ; et un élément de blocage 72, apte à être assemblé de manière amovible à ladite partie principale 70.

La partie principale 70 du deuxième élément de moule 64 comporte : une deuxième surface de moulage 74 ; et une deuxième surface d'appui 76 et une surface de blocage 78, bordant ladite deuxième surface de moulage 74.

Dans le mode de réalisation représenté, la première surface de moulage 66 du premier élément de moule 62 présente une forme complémentaire des deuxième 22 et quatrième 38 faces principales du corps 12 ; et la deuxième surface de moulage 74 du deuxième élément de moule 64 présente une forme complémentaire des première 20 et troisième 36 faces principales, des nervures 27 et de la face d'extrémité 24 dudit corps 12.

Par ailleurs, l'installation 60 comprend un élément de maintien 80, apte à maintenir l'élément chauffant 14 par rapport aux premier 62 et un deuxième 64 éléments de moule, durant le moulage du corps 12 par injection.

Dans le mode de réalisation représenté sur la figure 3, l'installation 60 comprend en outre l'élément chauffant 14, dont la nappe souple 40 est formée d'une pièce avec une languette de textile formant l'élément de maintien 80. De préférence, l'élément de maintien 80 est adjacent à la partie interne 50 de l'élément chauffant 14 et disposé à l'opposé de la partie externe 52 selon la première direction Y.

L'installation 60 comporte en outre au moins un conduit 82 d'injection. Dans le mode de réalisation représenté, l'au moins un conduit 82 d'injection est ménagé dans le premier élément de moule 62.

Dans la configuration assemblée de l'installation 60, la partie principale 70 et l'élément de blocage 72 du deuxième élément de moule 64 sont fixés l'un à l'autre, l'élément de maintien 80 étant pressé entre ledit élément de blocage 72 et la surface de blocage 78 de ladite partie principale 70.

Par ailleurs, dans la configuration assemblée de l'installation 60, la partie externe 52 de l'élément chauffant 14 est pressée entre les première 68 et deuxième 76 surfaces d'appui.

Par ailleurs, dans la configuration assemblée de l'installation 60, les première 66 et deuxième 74 surfaces de moulage sont en vis-à-vis l'une de l'autre, de sorte à définir une cavité de moulage 84, de forme complémentaire au corps 12 de la pièce 10. La partie interne 50 de l'élément chauffant 14 est disposée dans ladite cavité de moulage 84 ; la première 44 et la deuxième 46 faces de la nappe souple 40 de l'élément chauffant 14 sont orientées respectivement vers la première 66 et vers la deuxième 74 surfaces de moulage. L'au moins un conduit d'injection 82 débouche dans ladite cavité de moulage 84.

Dans une première étape du procédé de fabrication de la pièce 10, l'élément chauffant 14 est assemblé aux premier 62 et deuxième 64 éléments de moule, de sorte à disposer l'installation 60 dans la configuration assemblée décrite ci-dessus. L'élément chauffant 14 est alors dans une première conformation, visible sur la figure 3.

Dans la première conformation de l'élément chauffant 14, la partie interne 50 dudit élément chauffant 14 est disposée dans la cavité de moulage 84 ; et ladite partie interne 50 est maintenue au contact du premier 62 et/ou du deuxième 64 éléments de moule au niveau d'un premier 86 et d'un deuxième 88 points de contact opposés. Le premier point de contact 86 est adjacent à la languette de textile formant l'élément de maintien 80 ; le deuxième point de contact 88 est adjacent à la partie externe 52 de l'élément chauffant 14.

Entre lesdits premier 86 et deuxième 88 points de contact, la partie interne 50 de l'élément chauffant 14 dans la première conformation est partiellement écartée de la deuxième surface de moulage 74.

Dans une deuxième étape du procédé de fabrication de la pièce 10, le matériau plastique du corps 12 est injecté à l'état fluide dans la cavité de moulage 84, du côté de la première face 44 de la nappe souple 40. Par exemple, l'injection est réalisée par l'au moins un conduit 82 d'injection ménagé dans le premier élément de moule 62.

L'injection du matériau plastique conduit au plaquage de la partie interne 50 de l'élément chauffant contre une première partie de la deuxième surface de moulage 74. Ladite première partie correspond à la face d'extrémité 24 et aux première 20 et troisième 36 faces principales du corps 12. L'application de contraintes mécaniques conduit l'élément chauffant 14 à être déplacé et étiré jusqu'à une deuxième conformation, correspondant à celle dudit élément chauffant dans la pièce 10 des figures 1 et 2.

Dans le mode de réalisation représenté, la partie interne 50 de l'élément chauffant 14 dans la deuxième conformation forme un premier 90 et un deuxième 92 plis (figure 2). Le premier pli 90 s'étend à l'intersection de la première face principale 20 et de la face d'extrémité 24. Le deuxième pli 92 s'étend à l'intersection des première 20 et troisième 36 faces principales.

Dans une troisième étape du procédé, le matériau plastique est solidifié, formant le corps 12.

Dans une quatrième étape du procédé, le corps 12 ainsi formé est démoulé en écartant l'un de l'autre les premier 62 et troisième 64 éléments de moule ; puis l'élément de blocage 72 est écarté de la partie principale 70 du deuxième élément de moule 64.

La pièce 10 précédemment décrite est ainsi obtenue.

Les angles α et γ au niveau des premier 90 et deuxième 92 plis de l'élément chauffant 14 sont plus élevés que les angles β et δ au niveau des nervures 27 du corps 12. Lors de l'injection du matériau plastique, les contraintes subies par l'élément chauffant 14, notamment au niveau du deuxième point de contact 88, sont donc plus faibles que si ledit élément chauffant était plaqué au moule au niveau du plan de crête 30.

La configuration précédemment décrite de la première portion 16 du corps 12, dans laquelle l'épaisseur 25, 26 diminue progressivement jusqu'à la face d'extrémité 24, permet ainsi d'éviter une rupture de l'au moins un fil chauffant 42 de l'élément chauffant 14 durant le procédé d'injection dudit corps 12.

Par ailleurs, la présence des nervures 27 permet de conserver une épaisseur globale 25, 39 sensiblement constante entre les première 16 et deuxième 17 portions du corps 12. Une telle caractéristique permet notamment de limiter d'éventuels défauts de brillance liées au procédé d'injection. Les deuxième 22 et quatrième 38 faces principales du corps 12, destinées à être visibles par les utilisateurs de la pièce 10, sont donc plus facilement obtenues avec un niveau de brillance tel que souhaité.

## Revendications

1. Pièce (10) d'équipement comprenant : un corps (12) en matériau plastique ; et un élément chauffant (14) comprenant une nappe souple (40) ;
le corps comportant une première (16) et une deuxième (17) portions, continues l'une par rapport à l'autre et alignées selon une première direction (Y) ;
la première portion (16) comprenant : une première (20) et une deuxième (22) faces principales, sensiblement opposées l'une à l'autre ; et une face d'extrémité (24), joignant lesdites première et deuxième faces principales à l'opposé de la deuxième portion (17) ;
la deuxième portion (17) comprenant une troisième (36) et une quatrième (38) faces principales, sensiblement opposées l'une à l'autre, continues respectivement avec la première (20) et avec la deuxième (22) faces principales ;
l'élément chauffant comprenant : une partie interne (50), au contact du matériau plastique du corps ; et une partie externe (52), en saillie par rapport audit corps ;
la pièce d'équipement étant **caractérisée en ce que** :
- une distance entre les première (20) et deuxième (22) faces principales diminue progressivement entre une première valeur (25), à proximité de la deuxième portion (17) du corps, et une deuxième valeur (26), à proximité de la face d'extrémité (24) ; et
- la partie interne (50) de l'élément chauffant comprend une première (54) et une deuxième (56) zones, continues l'une par rapport à l'autre ; la première zone (54) étant disposée entre la deuxième zone (56) et la partie externe (52) de l'élément chauffant selon la première direction ;
les première (54) et deuxième (56) zones de ladite partie interne formant respectivement la première (20) et la troisième (36) faces principales du corps.

2. Pièce d'équipement selon la revendication 1, dans laquelle la première portion (16) du corps comporte une pluralité de nervures (27) en saillie par rapport à la première face principale (20), chaque nervure s'étendant selon la première direction (Y) depuis la face d'extrémité (24).

3. Pièce d'équipement selon la revendication 2, dans laquelle chacune de la pluralité de nervures s'étend jusqu'à une crête (28) sensiblement plane, les crêtes de la pluralité de nervures étant sensiblement coplanaires et formant un plan de crête (30).

4. Pièce d'équipement selon la revendication 3, dans laquelle : chacune des première (20) et troisième (36) faces principales du corps est sensiblement plane ; la troisième face principale (36) forme un premier angle (γ) avec la première face principale et un deuxième angle (δ) avec le plan de crête (30) ; chacun desdits premier et deuxième angles étant compris entre 90° et 170° ; le deuxième angle (δ) étant strictement inférieur au premier angle (γ).

5. Pièce d'équipement selon la revendication 3 ou 4, dans laquelle la partie interne (50) de l'élément chauffant (14) comprend en outre une troisième zone (58), disposée entre la première zone (54) et la partie externe (52) de l'élément chauffant et formant la face d'extrémité (24) de la première portion du corps (12).

6. Pièce d'équipement selon l'une des revendications précédentes, dans laquelle une première épaisseur (25) de la première portion (16) du corps, à proximité de la deuxième portion (17), est sensiblement égale à une deuxième épaisseur (39) de ladite deuxième portion (17).

7. Procédé de fabrication d'une pièce (10) d'équipement selon l'une des revendications précédentes, comprenant les étapes suivantes :
- fourniture d'une cavité de moulage (84), comprenant une surface de moulage (74) ; ladite surface de moulage comprenant : une première partie, complémentaire des première (20) et troisième (36) faces principales du corps ; et une deuxième partie, complémentaire des nervures (27) du corps ;
- disposition de la partie interne (50) de l'élément chauffant (14) dans la cavité de moulage (84) ; puis
- injection de matériau plastique à l'état fluide dans la cavité de moulage (84), de sorte à plaquer la partie interne (50) de l'élément chauffant (14) contre la première partie de la surface de moulage (74) ; puis
- durcissement du matériau plastique, de sorte à former le corps (12).

8. Procédé selon la revendication 7, dans lequel : la cavité de moulage (84) est formée par un premier (62) et un deuxième (64) éléments de moules, mobiles l'un par rapport à l'autre ; et lors de l'injection du matériau plastique, la partie externe (52) de l'élément chauffant est pressée entre lesdits premier (62) et deuxième (64) éléments de moule.

9. Procédé selon la revendication 8, dans lequel :
- la nappe souple (40) de l'élément chauffant (14) est solidaire d'un élément de maintien (80), à l'opposé de la partie externe (52) dudit élément chauffant ;
- l'un (64) des premier et deuxième éléments de moule comprend : une partie principale (70) ; et un élément de blocage (72), apte à être assemblé de manière amovible à ladite partie principale ; et
- lors de l'injection du matériau plastique, l'élément de maintien (80) est pressé entre ladite partie principale (70) et ledit élément de blocage (72) dudit premier ou deuxième (64) élément de moule.
